# FASCICULE DE BREVET EUROPEEN

(11) **EP 3 202 365 B1**
(45) Date de publication et mention de la délivrance du brevet: **26.09.2018**
(21) Numéro de dépôt: 17154318.4
(22) Date de dépôt: 02.02.2017
(51) Int. Cl.: A61C 8/00

(54) **COMPOSANT DENTAIRE POUR LA RESTAURATION PROTHETIQUE UNITAIRE D'UNE DENT**
ZAHNKOMPONENTE FÜR DIE PROTHETISCHE EINZELZAHNVERSORGUNG
DENTAL COMPONENT FOR THE INDIVIDUAL PROSTHETIC RECONSTRUCTION OF A TOOTH

(30) Priorité: 05.02.2016 FR 1650935
(43) Date de publication de la demande: 09.08.2017
(73) Titulaire: ANTHOGYR, 74700 Sallanches (FR)
(72) Inventeur: RICHARD, Hervé, 73590 NOTRE DAME DE BELLECOMBE (FR)
(74) Mandataire: Cabinet Poncet

(56) Documents cités:
- EP-A1- 2 127 612
- WO-A1-2012/163528
- GB-A- 2 509 136
- US-A1- 2006 014 120

## Description

La présente invention concerne le domaine dentaire, et concerne plus particulièrement un composant dentaire pour la restauration prothétique unitaire d'une dent, ledit composant dentaire étant destiné à être reçu sur un implant dentaire.

Dans le cadre de la restauration prothétique unitaire d'une dent, on a souvent recours à une prothèse transfixée, c'est-à-dire munie d'un passage traversant permettant la fixation de la prothèse par une vis de fixation (traversant la prothèse) à un implant dentaire qui est ostéointégré dans la mâchoire du patient.

On connaît différents types de prothèses transfixées :
- celles comportant une âme (métallique notamment) sur laquelle est opérée une stratification par le prothésiste en laissant ouvert le passage traversant (application d'un matériau en une ou plusieurs couches permettant de donner un aspect le plus proche d'une dent naturelle) ;
- celles comportant une âme en céramique (usinée à partir d'un bloc de céramique ou produite par frittage d'une poudre céramique notamment) éventuellement revêtue par le prothésiste d'une ou plusieurs couches très légères de texturation ou de coloration procurant un aspect le plus proche d'une dent naturelle.

En fonction de la position de l'implant dentaire fixé dans la mâchoire du patient, il est souvent nécessaire de régler avec soin l'emplacement de l'émergence coronaire du puits permettant le passage de la vis de fixation. Il s'agit en effet d'être en mesure, malgré le peu de place disponible dans la bouche du patient, d'accéder à la vis de fixation avec un outil de vissage. Il est en outre important que l'émergence coronaire du puits d'accès soit disposée à l'écart des parties actives de la dent lors de la mastication (cuspides).

On connaît pour cela des prothèses dentaires (voir notamment les documents EP 2 053 985, WO 2013/004387 et US 2014/0178836) à âme munie d'un passage traversant angulé comprenant un premier tronçon de passage s'étendant depuis une extrémité proximale du premier élément selon un premier axe longitudinal, et comprenant un deuxième tronçon de passage sécant avec le premier tronçon de passage, les premier et deuxième tronçons de passage formant un angle non nul entre eux. Par « proximale », on entend qualifier une partie d'un élément destinée à être plus proche du patient lors de son utilisation qu'une autre partie qui sera qualifiée de « distale ».

Dans ces documents, le passage traversant angulé autorise une insertion et un cheminement de la vis de fixation selon une trajectoire courbe par un trajet débutant dans le deuxième tronçon de passage et se poursuivant jusque dans le premier tronçon de passage à l'extrémité duquel est prévu un siège contre lequel vient porter en appui la tête de vis. Cette trajectoire courbe de la vis nécessite un enlèvement de matière assez important dans l'âme de la prothèse, ce qui affaiblit sa résistance mécanique.

Le document GB 2 509 136 décrit un composant dentaire comportant un premier élément de type âme en céramique et un deuxième élément destiné à s'engager dans le premier élément et dans un implant dentaire pour indexer en rotation le premier élément par rapport à l'implant dentaire. Le deuxième élément comporte des ailettes longitudinales aptes à procurer une liaison précaire entre les premier et deuxième éléments. Le premier élément de type âme en céramique comporte un passage traversant angulé autorisant une insertion et un cheminement de la vis de fixation selon une trajectoire courbe par un trajet débutant dans le deuxième tronçon de passage et se poursuivant jusque dans le premier tronçon de passage à l'extrémité duquel est prévu un siège contre lequel vient porter en appui la tête de vis. Cette trajectoire courbe de la vis nécessite un enlèvement de matière assez important dans l'âme de la prothèse, ce qui affaiblit la résistance mécanique du premier élément.

Le document EP 2 127 612 A1 concerne un pilier dentaire angulé pour une restauration prothétique plurale. Ce pilier dentaire angulé comporte un premier passage qui est rectiligne et traverse le pilier de part en part. Un deuxième passage, incliné, vient intersecter un tronçon intermédiaire du premier passage traversant rectiligne. Cette structure à deux passages formant une intersection nécessite un retrait de matière important, source d'un affaiblissement de résistance mécanique.

Un problème proposé par la présente invention est de fournir une autre solution permettant de fixer sur un implant dentaire une prothèse dentaire transfixée comportant une âme sur laquelle est opérée une stratification ou comportant une âme en céramique, en autorisant le recours à un passage traversant angulé pour tenir compte des contraintes d'orientation de l'implant dentaire ostéointégré, d'accessibilité, et de préservation des parties actives de la dent, sans pour autant affaiblir inutilement la résistance mécanique de ladite prothèse dentaire transfixée.

Pour atteindre ces objets ainsi que d'autres, l'invention propose un composant dentaire pour la restauration prothétique unitaire d'une dent, destiné à être reçu sur un implant dentaire, comportant :
- un premier élément, de type âme sur laquelle est opérée une stratification, ou de type âme en céramique, ledit premier élément ayant un premier passage traversant constitué par des premier et deuxième tronçons de passage successifs, ledit premier tronçon de passage s'étendant depuis une extrémité proximale du premier élément selon un premier axe longitudinal, et ledit deuxième tronçon de passage prolongeant le premier tronçon de passage de telle sorte que les premier et deuxième tronçons de passage forment un angle non nul entre eux,
- un deuxième élément à deuxième passage traversant s'étendant selon un deuxième axe longitudinal, comportant une extrémité distale destinée à recevoir en appui le premier élément, et comportant une extrémité proximale destinée à venir porter en appui axial contre ou destinée à venir pénétrer dans ledit implant dentaire,
- une vis de fixation comportant une tête de vis depuis laquelle s'étend une tige de vis munie d'un tronçon fileté destiné à être reçu par vissage dans ledit implant dentaire ;
- plusieurs ailettes longitudinales s'étendent selon le deuxième axe longitudinal depuis et à l'écart de l'extrémité distale du deuxième élément, chaque ailette longitudinale comportant une partie distale libre radialement déplaçable à l'écart du deuxième axe longitudinal,
   selon l'invention :
- la tige de vis est apte à traverser le deuxième élément en étant reçue entre les ailettes longitudinales et dans le deuxième passage traversant pour se visser dans l'implant dentaire, tandis que la tête de vis vient alors reposer en appui axial contre les parties distales libres des ailettes longitudinales pour retenir le deuxième élément sur l'implant dentaire,
- le premier tronçon de passage du premier élément comporte des dimensions transversales permettant la réception des ailettes longitudinales et de la tête de vis par pénétration axiale selon le premier axe longitudinal depuis l'extrémité proximale du premier élément,
- la tête de vis et les parties distales libres des ailettes longitudinales sont conformées de façon que, lorsque le premier élément reçoit les ailettes longitudinales et la tête de vis, un déplacement relatif en translation de la vis de fixation vers le deuxième élément selon le deuxième axe longitudinal provoque un déplacement radial des parties distales libres des ailettes longitudinales à l'écart du deuxième axe longitudinal pour les presser contre la paroi latérale du premier tronçon de passage afin de s'opposer à un retrait du premier élément à l'écart du deuxième élément,
- le deuxième tronçon de passage du premier élément comporte des dimensions transversales inférieures à celles du premier tronçon de passage, mais suffisantes pour le passage d'un outil permettant d'entraîner en rotation la vis de fixation selon le deuxième axe longitudinal.

Un tel composant dentaire permet de fixer sur un implant dentaire de façon satisfaisante le premier élément comprenant un passage angulé, lequel premier élément étant une âme de prothèse dentaire destinée à être stratifiée ou une âme monobloc en céramique (frittée ou usinée) de prothèse dentaire, tout en tenant dûment compte des contraintes d'orientation de l'implant dentaire ostéointégré, d'accessibilité en bouche, et de préservation des parties actives de la dent. Lorsque la vis est mise en tension par vissage dans l'implant dentaire, la tête de vis est attirée vers le deuxième élément selon le deuxième axe longitudinal et provoque un déplacement radial des parties distales libres des ailettes longitudinales à l'écart du deuxième axe longitudinal. Cela a pour effet de presser les parties distales libres des ailettes longitudinales contre la paroi latérale du premier tronçon de passage, et donc de s'opposer à un retrait du premier élément à l'écart du deuxième élément.

L'enlèvement de matière qu'il faut effectuer dans le premier élément pour réaliser le passage angulé est moindre, notamment par rapport à ce qui est pratiqué dans les documents GB 2 509 136, EP 2 053 985, WO 2013/004387 et US 2014/0178836. En effet, la vis est seulement reçue dans le premier tronçon de passage et ne transite plus à travers le deuxième tronçon de passage. Seul l'outil d'entraînement en rotation de la vis de fixation passe par le deuxième tronçon de passage, et la partie traversante de l'outil est dépourvue de tête. Les premier et deuxième tronçons de passage peuvent ainsi avoir des formes relativement simples (sensiblement cylindriques). De plus, si la section transversale du premier tronçon de passage doit nécessairement comporter des dimensions autorisant l'insertion de la tête de vis, le deuxième tronçon de passage peut quant à lui comporter des dimensions transversales inférieures à celles du premier tronçon de passage, seulement suffisantes pour le passage d'un outil permettant d'entraîner en rotation la vis selon le deuxième axe longitudinal. Pour entraîner en rotation la vis, on peut par exemple avoir recours à l'utilisation d'un outil permettant une angulation avec la tête de vis lors d'un vissage ou dévissage, comme décrit par exemple dans le document EP 2 607 722.

Enfin, dans la présente invention, les premier et deuxième tronçons de passage se font suite et forment ainsi un premier passage traversant angulé se présentant sensiblement sous la forme d'un « virage ». Une telle structure permet de retirer moins de matière, et donc de moins affaiblir la résistance mécanique, que l'intersection entre deux passages qui est utilisée dans le document EP 2 127 612 A1.

De préférence, la tête de vis peut comporter une surface de contact sensiblement tronconique destinée à venir en contact contre les parties distales libres des ailettes longitudinales et/ou les parties distales libres des ailettes longitudinales comportent des surfaces respectives de contact destinées à recevoir en appui la tête de vis et formant une surface sensiblement tronconique.

On obtient alors de façon simple et efficace un déplacement radial des parties distales libres des ailettes longitudinales à l'écart du deuxième axe longitudinal lorsque la vis est déplacée relativement en translation vers le deuxième élément selon le deuxième axe longitudinal.

Avantageusement, le composant dentaire peut comprendre des moyens d'indexation en rotation des premier et deuxième éléments autour du premier axe longitudinal. On limite ainsi le risque de mouvements entre les premier et deuxième éléments, de tels mouvements pouvant mener à une défaillance prématurée de l'un ou l'autre élément (par usure notamment).

De préférence, le deuxième élément peut comporter un appendice proximal à section transversale non circulaire destiné à être reçu dans un logement à section transversale non circulaire de l'implant dentaire. On limite ainsi le risque de mouvements entre le deuxième élément et l'implant dentaire, de tels mouvements pouvant mener à une défaillance prématurée de l'un ou l'autre élément (par usure notamment). Et on garantit une orientation fixe et déterminée du composant dentaire par rapport à l'implant dentaire.

Avantageusement, le premier élément peut comporter une gorge destinée à recevoir les parties distales libres des ailettes longitudinales lors de leur déplacement radial à l'écart du deuxième axe longitudinal. L'engagement radial des parties distales libres des ailettes longitudinales dans la gorge procure une retenue améliorée du premier élément au deuxième élément.

De préférence, l'engagement des parties distales libres des ailettes longitudinales dans la gorge peut être réversible. Le caractère réversible de l'engagement des ailettes longitudinales dans la gorge permet au prothésiste d'assembler et séparer aisément et à plusieurs reprises le premier élément du deuxième élément et de la vis de fixation pour passer au four seulement le premier élément lors de sa stratification. On évite ainsi une dégradation du deuxième élément et de la vis de fixation par oxydation.

De préférence, la gorge et/ou les parties distales libres des ailettes longitudinales peuvent comporter des surfaces de contact respectives conformées de façon que le pressage radial des parties distales libres des ailettes longitudinales contre la gorge induise selon le premier axe longitudinal un pressage de l'extrémité proximale du premier élément contre l'extrémité distale du deuxième élément.

Le pressage de l'extrémité proximale du premier élément contre l'extrémité distale du deuxième élément limite efficacement le risque que s'insèrent et se développent des bactéries à l'interface entre les premier et deuxième éléments.

Avantageusement, on peut prévoir que :
- les parties distales libres des ailettes longitudinales sont déplaçables entre une position de retrait, dans laquelle elles sont radialement distantes du deuxième axe longitudinal selon une première distance, et une position d'écartement, dans laquelle elles sont radialement distantes du deuxième axe longitudinal selon une deuxième distance supérieure à la première distance,
- les parties distales libres des ailettes longitudinales sont élastiquement rappelées en position d'écartement,
- la gorge et les ailettes longitudinales sont dimensionnées et conformées de façon que les parties distales libres des ailettes longitudinales soient reçues par encliquetage dans la gorge lorsque le premier tronçon de passage reçoit les ailettes longitudinales et la tête de vis par pénétration axiale selon le premier axe longitudinal.

L'encliquetage des ailettes longitudinales dans la gorge permet de solidariser de façon précaire (car réversible), mais suffisante, les premier et deuxième éléments enfermant entre eux la vis de fixation. Le prothésiste peut ainsi expédier au chirurgien-dentiste un sous-ensemble unitaire comportant les premier et deuxième éléments ainsi que la vis de fixation assemblés. Le chirurgien-dentiste peut alors introduire le sous-ensemble unitaire en un seul geste dans la bouche du patient et l'engager sur l'implant dentaire ostéointégré. Cela réduit le nombre d'éléments à manipuler, le risque de perdre des composants (notamment la vis) et le risque de mauvaises manipulations.

Selon un autre aspect, la présente invention propose un ensemble dentaire comportant :
- un composant dentaire tel que décrit précédemment,
- un implant dentaire comportant un logement interne à tronçon fileté destiné à recevoir par vissage la vis de fixation.

Avantageusement, le deuxième élément peut être conformé de façon à rapporter et fixer le premier élément sur l'implant dentaire sans contact entre le premier élément et l'implant dentaire. Le deuxième élément sert ainsi d'entretoise entre le premier élément et l'implant dentaire. On évite ainsi que des micromouvements relatifs entre le premier élément et l'implant dentaire entraînent une usure prématurée de l'implant dentaire qui est ostéo-intégré et qu'il faut donc éviter d'avoir à remplacer. Ceci est tout particulièrement important lorsque l'implant dentaire n'est pas en céramique (mais par exemple métallique, en titane ou alliage de titane notamment). S'il se produit des micromouvements entre le premier élément et le deuxième élément induisant une usure prématurée de ce dernier, le deuxième élément peut aisément et rapidement être remplacé. Et s'il se produit une usure du deuxième élément génératrice de débris, ces débris seront générés dans une zone à l'écart de l'os, ce qui limite les risques de nécroses de l'os autour de l'implant dentaire.

Selon encore un autre aspect, la présente invention propose un procédé d'assemblage ex-vivo d'un composant dentaire tel que décrit ci-dessus à encliquetage des parties distales libres des ailettes longitudinales dans une gorge, ledit procédé comprenant les étapes suivantes :
a) insérer la tige de vis entre les ailettes longitudinales et dans le deuxième passage traversant,
b) insérer dans le premier tronçon de passage les ailettes longitudinales et la tête de vis par un mouvement de translation axiale selon le premier axe longitudinal depuis l'extrémité proximale du premier élément, jusqu'à obtenir un encliquetage des parties distales libres des ailettes longitudinales dans la gorge.

D'autres objets, caractéristiques et avantages de la présente invention ressortiront de la description suivante de modes de réalisation particuliers, faite en relation avec les figures jointes, parmi lesquelles :
- la figure 1 est une vue de côté d'un composant dentaire selon un premier mode de réalisation, avec un premier élément de type âme de prothèse dentaire destinée à être stratifiée ;
- la figure 2 est une vue de côté et en coupe du composant dentaire de la figure 1 ;
- la figure 3 est une vue en perspective et de dessous du premier élément du composant dentaire de la figure 1 ;
- la figure 4 est une vue en perspective et de dessous du deuxième élément du composant dentaire de la figure 1 ;
- la figure 5 est une vue de côté du composant dentaire de la figure 1 en cours d'assemblage ;
- la figure 6 est une vue en coupe partielle et de côté du composant dentaire de la figure 1 en cours d'assemblage, à une étape postérieure à celle illustrée sur la figure 5 ;
- la figure 7 est une vue en coupe et de côté du composant dentaire de la figure 1 en cours d'assemblage, à une étape postérieure à celle illustrée sur la figure 6 ;
- la figure 8 est une vue en coupe et de côté du composant dentaire de la figure 1 en cours d'assemblage sur un implant dentaire pour former un ensemble dentaire ;
- la figure 9 est une vue en coupe et de côté du composant dentaire de la figure 1 assemblé sur un implant dentaire pour former un ensemble dentaire, dans laquelle le premier élément est de type âme de prothèse dentaire stratifiée ; et
- la figure 10 est une vue en coupe similaire à celle de la figure 9, dans laquelle le premier élément est de type âme de prothèse dentaire monobloc en céramique (frittée ou usinée).

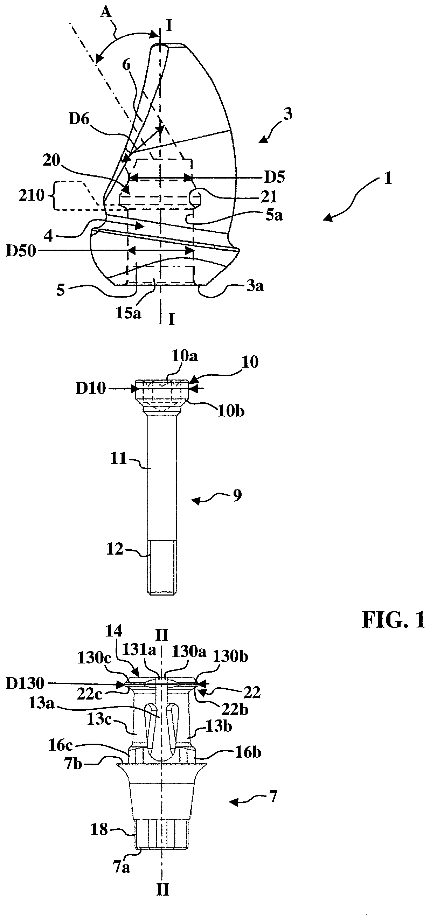

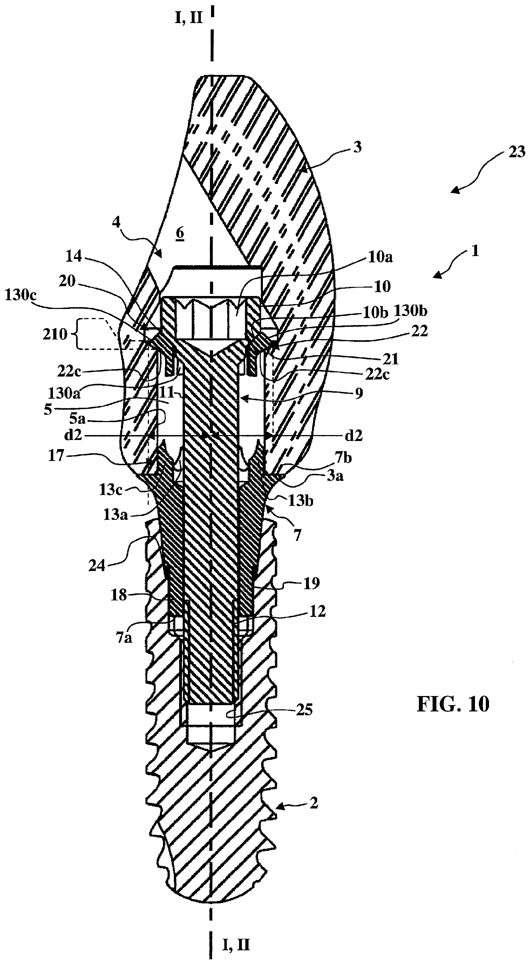

Sur les figures 1 à 10 sont illustrés deux modes de réalisation d'un composant dentaire 1 selon l'invention. Un premier mode de réalisation est illustré sur les figures 1 à 9, et un deuxième mode de réalisation est illustré sur la figure 10.

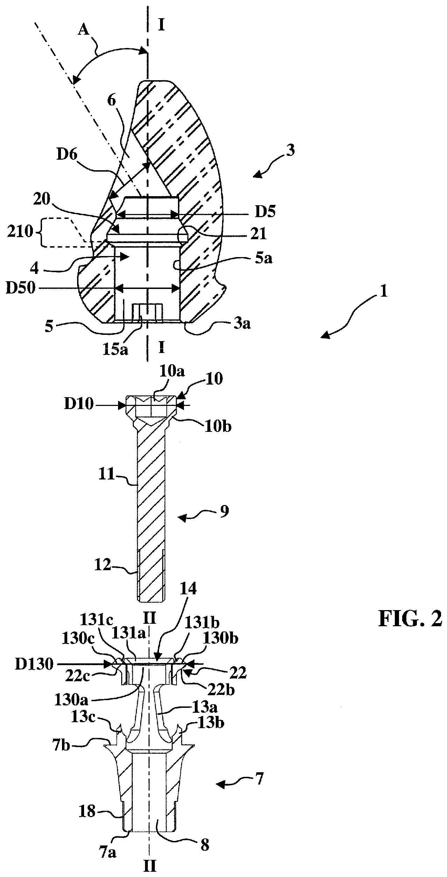

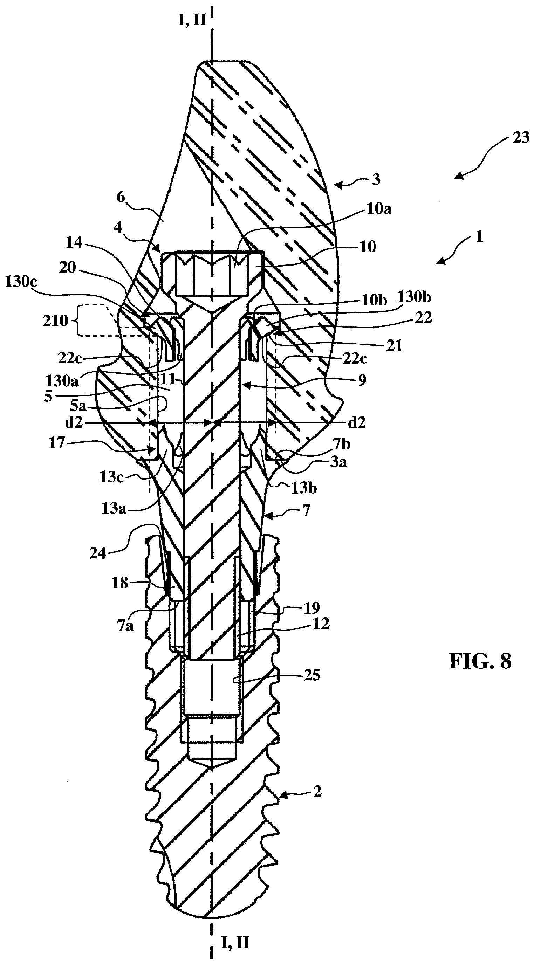

On voit plus particulièrement sur les figures 1 et 2 que le composant dentaire 1 pour la restauration prothétique unitaire d'une dent, destiné à être reçu sur un implant dentaire 2 (figure 8), comporte :
- un premier élément 3 à premier passage traversant 4 constitué par des premier 5 et deuxième 6 tronçons de passage successifs, ledit premier tronçon de passage 5 s'étendant depuis une extrémité proximale 3a du premier élément 3 selon un premier axe longitudinal I-I, et ledit deuxième tronçon de passage 6 prolongeant le premier tronçon de passage 5 de telle sorte que les premier et deuxième tronçons de passage 5 et 6 forment un angle A non nul entre eux,
- un deuxième élément 7 à deuxième passage traversant 8 s'étendant selon un deuxième axe longitudinal II-II, comportant une extrémité distale 7b destinée à recevoir en appui le premier élément 3, et comportant une extrémité proximale 7a destinée à venir porter en appui axial contre ou destinée à venir pénétrer dans ledit implant dentaire 2,
- une vis de fixation 9 comportant une tête de vis 10 depuis laquelle s'étend une tige de vis 11 munie d'un tronçon fileté 12 destiné à être reçu par vissage dans ledit implant dentaire 2 (figure 8).

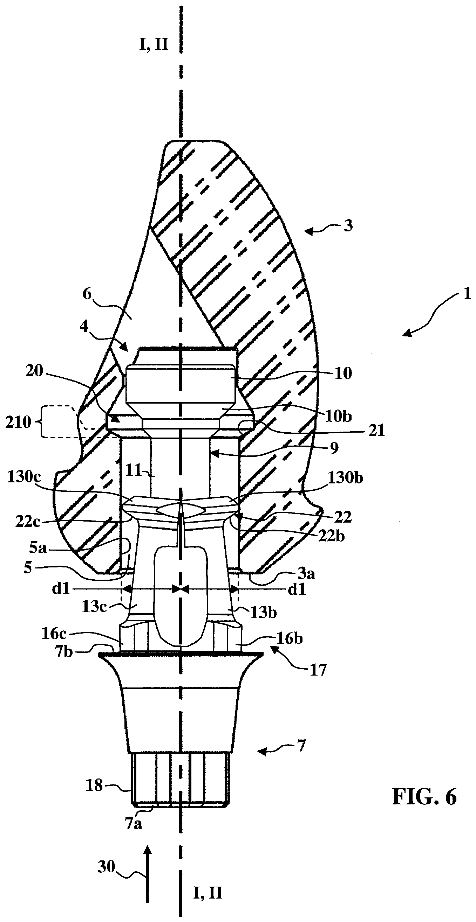

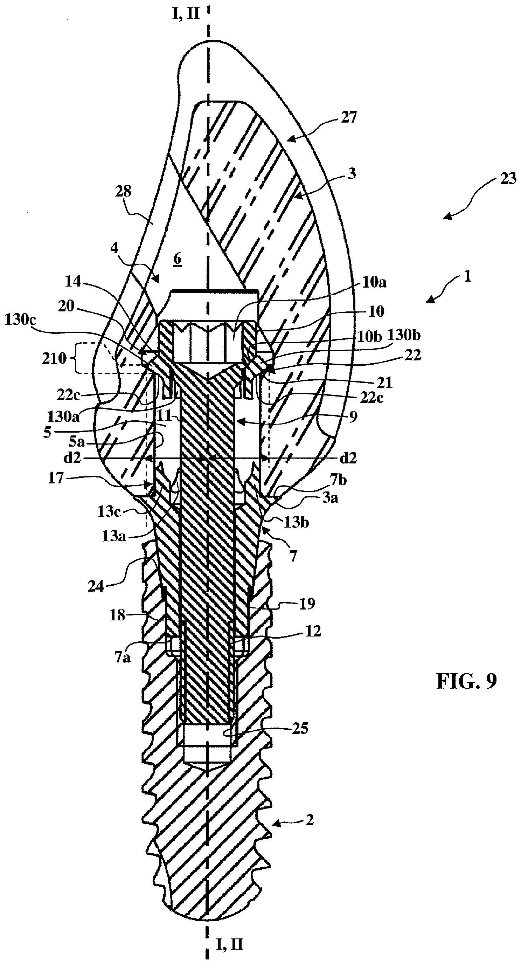

Trois ailettes longitudinales 13a, 13b et 13c s'étendent selon le deuxième axe longitudinal II-II depuis et à l'écart de l'extrémité distale 7b du deuxième élément 7, chaque ailette longitudinale 13a, 13b ou 13c comportant une partie distale libre 130a à 130c radialement déplaçable à l'écart du deuxième axe longitudinal II-II. La tige de vis 11 est apte à traverser le deuxième élément 7 en étant reçue entre les ailettes longitudinales 13a à 13c et dans le deuxième passage traversant 8 pour se visser dans l'implant dentaire 2, tandis que la tête de vis 10 vient alors reposer en appui axial contre les parties distales libres 130a à 130c des ailettes longitudinales 13a à 13c pour retenir le deuxième élément 7 sur l'implant dentaire 2 (figure 9). Le premier tronçon de passage 5 du premier élément 3 comporte des dimensions transversales permettant la réception des ailettes longitudinales 13a à 13c et de la tête de vis 10 par pénétration axiale selon le premier axe longitudinal I-I depuis l'extrémité proximale 3a du premier élément 3. En l'espèce, le premier tronçon de passage 5 comporte, au voisinage de l'extrémité proximale 3a, un diamètre minimal D50 inférieur au diamètre D130 des extrémités distales libres 130a à 130c. La réception des ailettes longitudinales 13a à 13c se fait donc au moyen d'un léger déplacement radial des parties distales libres 130a à 130c vers le deuxième axe longitudinal II-II, comme illustré sur la figure 6.

La tête de vis 10 et les parties distales libres 130a à 130c des ailettes longitudinales 13a à 13c sont conformées de façon que, lorsque le premier élément 3 reçoit les ailettes longitudinales 13a à 13c et la tête de vis 10, un déplacement relatif en translation de la vis de fixation 9 vers le deuxième élément 7 selon le deuxième axe longitudinal II-II provoque un déplacement radial des parties distales libres 130a à 130c des ailettes longitudinales 13a à 13c à l'écart du deuxième axe longitudinal II-II pour les presser contre la paroi latérale 5a du premier tronçon de passage 5 afin de s'opposer à un retrait du premier élément 3 à l'écart du deuxième élément 7.

Le deuxième tronçon de passage 6 comporte des dimensions transversales (en l'occurrence un diamètre D6) inférieures à celles (diamètre D5) du premier tronçon de passage 5, mais suffisantes pour le passage d'un outil permettant d'entraîner en rotation la vis de fixation 9 selon le deuxième axe longitudinal II-II.

De façon plus précise, sans que cela ne constitue pour autant une limitation de la protection, la tête de vis 10 comporte une empreinte de vissage 10a creuse à section transversale non circulaire, en l'occurrence polygonale à six pans.

Pour entraîner la vis de fixation 9 en rotation selon le deuxième axe longitudinal II-II au moyen d'un outil engagé avec l'angle A dans le deuxième tronçon de passage 6, on pourra utiliser une clé à six pans permettant un effet de rotule, une telle clé étant bien connue de l'homme du métier. L'empreinte 10a peut aussi être conçue selon les enseignements du document EP 2 607 722 afin d'autoriser l'utilisation d'un outil d'entraînement en rotation permettant un effet de rotule.

On comprend que le premier tronçon de passage 5 doit avoir une section transversale minimale de diamètre D5 légèrement supérieur au diamètre extérieur D10 de la tête de vis 10. De son côté, le deuxième tronçon de passage 6 peut avoir des dimensions transversales (diamètre D6 ici) inférieures à celles du premier tronçon de passage 5, car l'outil d'entraînement en rotation de la vis de fixation 9 peut lui-même avoir une section transversale nettement inférieure au diamètre D10 dès lors qu'il doit seulement pénétrer dans l'empreinte 10a creuse de la tête de vis 10. Le premier élément 3, au voisinage du deuxième tronçon de passage 6 peut ainsi conserver plus de matière constitutive et présenter ainsi une meilleure résistance mécanique.

On voit plus particulièrement sur la figure 2 que la tête de vis 10 comporte une surface de contact 10b sensiblement tronconique destinée à venir en contact contre les parties distales libres 130a à 130c des ailettes longitudinales 13a à 13c. De leur côté, les parties distales libres 130a à 130c des ailettes longitudinales 13a à 13c comportent des surfaces respectives de contact 131a à 131c destinées à recevoir en appui la tête de vis 10 et formant une surface sensiblement tronconique 14. A noter que la surface de contact 10b de la tête de vis 10 et la surface sensiblement tronconique 14 formée par les surfaces respectives de contact 131a à 131c peuvent, au lieu d'avoir un profil rectiligne comme illustré sur la figure 2, avoir un profil courbe (convexe ou concave) dès lors qu'il est procuré de façon similaire une diminution progressive de section transversale. On peut donc notamment envisager des surfaces de contact 10b et/ou 14 troncosphériques (intersection d'une sphère entre deux plans sensiblement parallèles). Toutes ces variantes de forme sont considérées couvertes par l'expression « sensiblement tronconique ». Les formes des surfaces de contact 10b et 14 favorisent le déplacement radial des parties distales libres 130a à 130c à l'écart du deuxième axe longitudinal II-II lorsque la vis de fixation 9 subit un déplacement relatif en translation vers le deuxième élément 7 lorsqu'elle est vissée dans un implant dentaire 2.

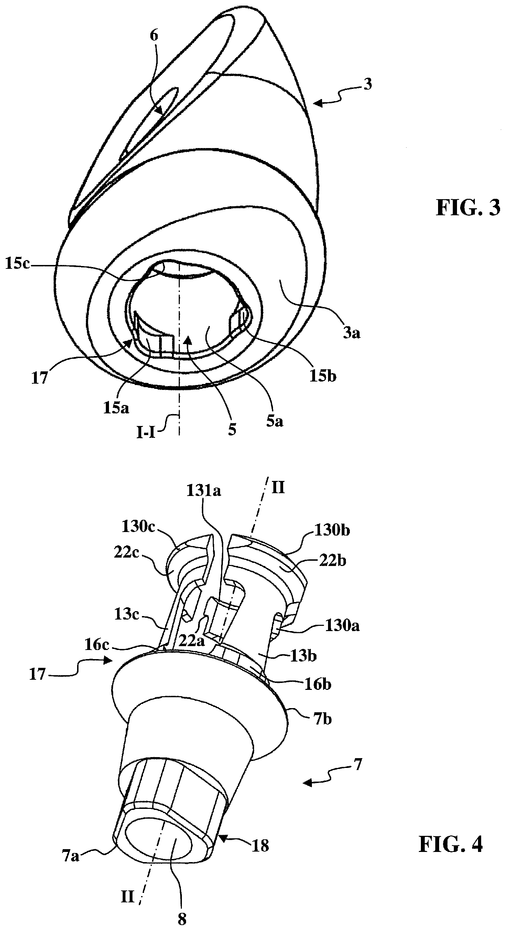

On voit plus particulièrement sur les figures 3 et 4 que le premier élément 3 comporte, à l'entrée du premier tronçon de passage 5, trois logements radiaux 15a à 15c disposés à 120° les uns des autres et destinés à recevoir trois ergots 16a à 16c correspondants prévus sur le deuxième élément 7 à la base des ailettes longitudinales 13a à 13c (l'ergot 16a n'est pas visible sur la figure 4 du fait de l'orientation du deuxième élément 7). Les logements radiaux 15a à 15c et ergots correspondants 16a à 16c constituent des moyens d'indexation en rotation 17 des premier et deuxième éléments 3 et 7 autour du premier axe longitudinal I-I (qui coïncident avec le deuxième axe longitudinal II-II lorsque les premier et deuxième éléments 3 et 7 sont assemblés).

On voit par ailleurs sur la figure 4 que le deuxième élément 7 comporte un appendice proximal 18 à section transversale non circulaire (sensiblement triangulaire à sommets arrondis) destiné à être reçu dans un logement 19 correspondant (figure 8) de l'implant dentaire 2, ayant une section transversale non circulaire correspondante. L'appendice proximal 18 et le logement 19 coopèrent pour indexer en rotation autour du deuxième axe longitudinal II-II le deuxième élément 7 par rapport à l'implant dentaire 2.

Au-dessus de l'appendice proximal 18 se trouve un tronçon tronconique destiné à venir s'emmancher coniquement dans l'implant dentaire 2.

On voit plus clairement sur la figure 2 que le premier élément 3 comporte une gorge 20 destinée à recevoir les parties distales libres 130a à 130c des ailettes longitudinales 13a à 13c lors de leur déplacement radial à l'écart du deuxième axe longitudinal II-II.

La gorge 20 et la tête de vis 10 comportent des surfaces de contact 21 et 22 respectives conformées de façon que le pressage radial des parties distales libres 130a à 130c des ailettes longitudinales 13a à 13c contre la gorge 20 induise selon le premier axe longitudinal I-I un pressage de l'extrémité proximale 3a du premier élément 3 contre l'extrémité distale 7b du deuxième élément 7. En l'espèce, la surface de contact 21 de la gorge 20 comporte un tronçon tronconique 210, tandis que les surfaces de contact respectives 22a à 22c des parties distales libres 130a à 130c forment une surface 22 sensiblement tronconique. Là encore, ces surfaces dites « sensiblement tronconiques » sont représentées avec un profil rectiligne, mais ce profil pourrait être également courbe (concave ou convexe).

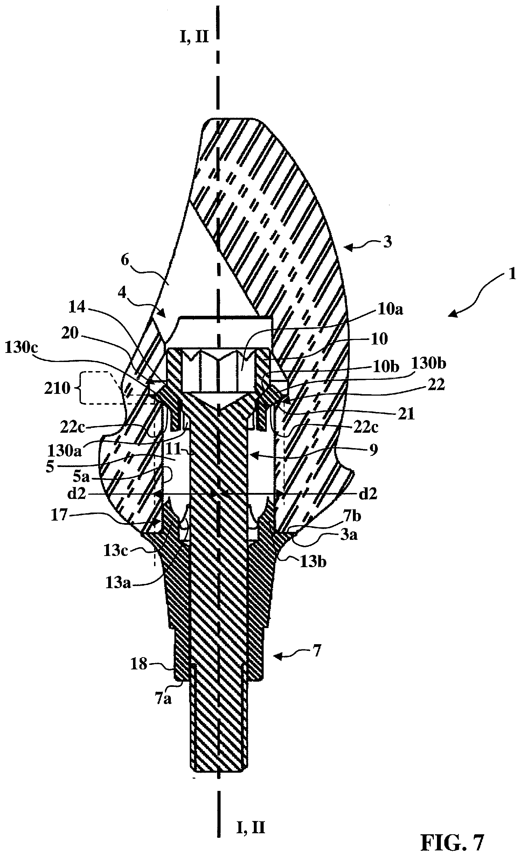

On voit plus particulièrement sur la figure 6 que les parties distales libres 130a à 130c des ailettes longitudinales 13a à 13c sont déplaçables entre une position de retrait (figure 6) dans laquelle elles sont radialement distantes du deuxième axe longitudinal II-II selon une première distance d1, et une position d'écartement (figure 7), dans laquelle elles sont radialement distantes du deuxième axe longitudinal II-II selon une deuxième distance d2 supérieure à la première distance d1. Les parties distales libres 130a à 130c des ailettes longitudinales 13a à 13c sont élastiquement rappelées en position d'écartement (figure 7). La gorge 20 et les ailettes longitudinales 13a à 13c sont dimensionnées et conformées de façon que les parties distales libres 130a à 130c des ailettes longitudinales 13a à 13c sont reçues par encliquetage dans la gorge 20 lorsque le premier tronçon de passage 5 reçoit les ailettes longitudinales 13a à 13b et la tête de vis par pénétration axiale selon le premier axe longitudinal I-I.

Sur la figure 8 est illustré un ensemble dentaire 23 comportant :
- un composant dentaire 1 tel que décrit précédemment,
- un implant dentaire 2 comportant un logement interne 24 à tronçon fileté 25 destiné à recevoir par vissage la vis de fixation 9.

Dans le mode de réalisation illustré sur les figures 1 à 9, le premier élément 3 est une âme de prothèse, réalisée en métal ou autre matériau, destinée à être stratifiée. Sur la figure 9, on voit que la stratification 27 réalisée par le prothésiste laisse débouchant le deuxième tronçon de passage 6. Une fois le composant dentaire 1 fixé sur l'implant dentaire 2 au moyen de la vis de fixation 9, le chirurgien-dentiste peut reboucher l'orifice 28 donnant accès au deuxième tronçon de passage 6 en y injectant un matériau approprié.

Le deuxième mode de réalisation illustré sur la figure 10 diffère du premier mode de réalisation illustré sur la figure 9 seulement en ce que le premier élément 3 est une âme monobloc en céramique de prothèse dentaire. Cette âme monobloc en céramique peut être obtenue par usinage dans un bloc massif de céramique ou peut être obtenue par frittage d'une poudre. L'âme monobloc en céramique peut en outre comporter en surface extérieure une légère couche d'un matériau tel qu'un vernis lui conférant une esthétique convenant mieux à la dentition du patient (par exemple en terme de teinte si le patient a les dents plus ou moins jaunes). Là encore, comme dans le premier mode de réalisation illustré sur la figure 9, le deuxième tronçon de passage est obturé par le chirurgien-dentiste après que le composant dentaire 1 ait été rapporté et fixé sur l'implant dentaire 2 au moyen de la vis de fixation 9.

L'utilisation du composant dentaire 1 selon l'invention va désormais être expliquée au moyen des figures 2 et 5 à 9.

Pour la restauration prothétique unitaire d'une dent du patient, le prothésiste dispose d'un deuxième élément 7 et d'une vis de fixation 9 qui sont des éléments standards correspondant à un implant dentaire 2 ostéointégré dans la mâchoire du patient. Le premier élément 3 est un élément fabriqué sur mesure pour le patient par le prothésiste, de préférence par usinage tridimensionnel.

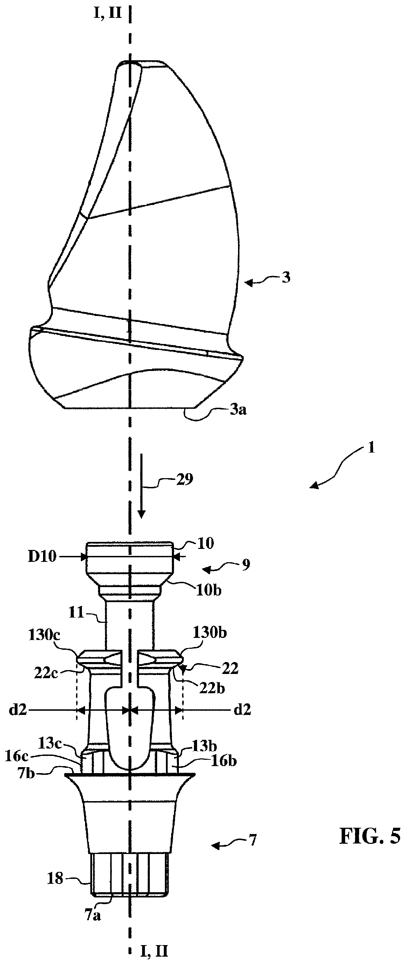

Une fois le premier élément 3 fabriqué par le prothésiste, celui-ci peut procéder à l'assemblage ex-vivo du composant dentaire 1. Pour ce faire, le prothésiste insère la tige de vis 11 entre les ailettes longitudinales 13a à 13c et dans le deuxième passage traversant 8 (mouvement illustré par la flèche 29 sur la figure 5).

Puis, le prothésiste insère dans le premier tronçon de passage 5 les ailettes longitudinales 13a à 13c et la tête de vis 10 par un mouvement de translation axiale (illustré par la flèche 30 sur la figure 6) selon le premier axe longitudinal I-I depuis l'extrémité proximale 3a du premier élément 3. Pour autoriser cette insertion, les parties distales libres 130a à 130c se déplacent élastiquement depuis leur position d'écartement (figure 5) vers une position de retrait (figure 6). Le prothésiste poursuit alors le mouvement de translation axiale (flèche 30 de la figure 6) jusqu'à obtenir un encliquetage des parties distales libres 130a à 130c des ailettes longitudinales 13a à 13c dans la gorge 20 (figure 7). Lors de cette insertion, les ergots 16a à 16c sont reçus dans les logements 15a à 15c pour indexer en rotation les premier et deuxième éléments 7 autour du premier axe longitudinal I-I.

On obtient alors le composant dentaire 1 assemblé tel qu'illustré sur la figure 7.

Le prothésiste effectue ensuite une stratification du premier élément 3, en laissant ouvert le deuxième tronçon de passage 6. Lors de cette stratification, le composant dentaire 1 est généralement installé sur un maître modèle. Le prothésiste applique sur le premier élément 3 un matériau en une ou plusieurs couches permettant de donner un aspect le plus proche d'une dent naturelle, tout en tenant compte des dents adjacentes.

Chaque couche fait l'objet d'une cuisson au four. Pour ce faire, le prothésiste retire le composant dentaire 1 du maître-modèle et sépare aisément le premier élément 3 stratifié du deuxième élément 7 et de la vis de fixation 9 grâce à l'engagement réversible des parties distales libres 130a-130c des ailettes longitudinales 13a-13c dans la gorge 20. Le premier élément 3 est alors passé au four pour cuire la couche de matériau appliquée. Le deuxième élément 7 et la vis de fixation 9 ne passent pas au four afin d'éviter leur oxydation. Un deuxième élément 7 oxydé pourrait occasionner un retrait gingival. Et une oxydation du deuxième élément 7 et/ou de la vis de fixation 9 réduirait sa(leur) résistance mécanique.

Une fois le premier élément 3 stratifié par le prothésiste, celui-ci peut procéder à un dernier assemblage ex-vivo du composant dentaire 1, puis il expédie ensuite le composant dentaire 1 assemblé au chirurgien-dentiste qui procédera à son installation en bouche du patient. Pour ce faire, comme illustré sur la figure 8, le chirurgien-dentiste insère le deuxième élément 7 (qui peut parfois être qualifié d' « embase ») dans le logement interne 24 de l'implant dentaire 2. Lors de cette insertion, l'appendice proximal 18 coopère avec le logement 19 de l'implant dentaire 2 pour indexer le composant dentaire 1 en rotation autour du deuxième axe longitudinal II-II. Le tronçon tronconique situé au-dessus de l'appendice proximal 18 vient s'emmancher coniquement dans une portée tronconique de forme correspondante située au-dessus du logement 19 à section transversale non circulaire de l'implant dentaire 2. Cet emmanchement conique contribue à une bonne stabilité de l'assemblage.

Le chirurgien-dentiste insère alors dans le deuxième tronçon de passage 6 un outil (une clé à six pans en l'espèce) jusqu'à faire pénétrer son extrémité dans l'empreinte 10a creuse de la tête de vis 10, permettant d'entraîner en rotation la vis de fixation 9. Le chirurgien-dentiste visse alors la vis de fixation 9 dans le tronçon fileté 25 de l'implant dentaire 2, ce qui a pour effet de déplacer relativement en translation la vis de fixation 9 vers le deuxième élément 7 selon le deuxième axe longitudinal II-II. Du fait de la conformation de la tête de vis 10 et des parties distales libres 130a à 130c des ailettes longitudinales 13a à 13c, ce déplacement en translation de la vis de fixation 9 provoque un déplacement radial des parties distales libres 130a à 130c à l'écart du deuxième axe longitudinal II-II pour les presser contre la paroi latérale 5a du premier tronçon de passage 5. Par voie de conséquence, le vissage de la vis de fixation 9 presse les unes contre les autres les surfaces de contact 21 (de la gorge 20) et 22a à 22c (des parties distales libres 130a à 130c). Le pressage radial des parties distales libres 130a à 130c contre la gorge 20 induit, selon le premier axe longitudinal I-I et du fait de l'orientation des surfaces de contact 21 et 22a à 22c, un pressage de l'extrémité proximale 3a du premier élément 3 contre l'extrémité distale 7b du deuxième élément 7. Ce pressage permet d'assurer une bonne étanchéité à l'interface des premier et deuxième éléments 3 et 7 afin d'éviter que s'y développent des bactéries. On se trouve alors dans la configuration illustrée sur la figure 9.

Enfin, le chirurgien-dentiste procède au bouchage de l'orifice 28 du deuxième tronçon de passage 6 au moyen d'un matériau approprié.

L'utilisation des composants dentaires illustrée sur la figure 10 est en tout point similaire à l'utilisation décrite précédemment du composant dentaire 1 des figures 1 à 9. Dans ce mode de réalisation, le premier élément 3 peut également subir une stratification (facultative) par l'application par le prothésiste d'une ou plusieurs couches très légères de texturation ou de coloration procurant un aspect le plus proche d'une dent naturelle.

Dans le cadre du deuxième mode de réalisation de la présente invention à premier élément 3 se présentant sous la forme d'une âme en céramique (usinée à partir d'un bloc de céramique ou produite par frittage d'une poudre céramique notamment), le deuxième élément 7 permet de rapporter et fixer le premier élément 3 sur l'implant dentaire 2 sans contact direct entre le premier élément 3 et l'implant dentaire 2. Le deuxième élément 7 sert d'entretoise. On évite ainsi que des micromouvements relatifs entre le premier élément 3 et l'implant dentaire 2 entraînent une usure prématurée de l'implant dentaire 2 qui est ostéo-intégré et qu'il faut donc éviter d'avoir à remplacer. Ceci est tout particulièrement important lorsque l'implant dentaire 2 n'est pas en céramique (mais par exemple métallique, en titane ou alliage de titane notamment). S'il se produit des micromouvements entre le premier élément 3 et le deuxième élément 7 induisant une usure prématurée de ce dernier, le deuxième élément 7 peut aisément et rapidement être remplacé.

## Revendications

1. Composant dentaire (1) pour la restauration prothétique unitaire d'une dent, destiné à être reçu sur un implant dentaire (2), comportant :
- un premier élément (3), de type âme sur laquelle est opérée une stratification, ou de type âme en céramique, ledit premier élément (3) ayant un premier passage traversant (4) constitué par des premier (5) et deuxième (6) tronçons de passage successifs, ledit premier tronçon de passage (5) s'étendant depuis une extrémité proximale (3a) du premier élément (3) selon un premier axe longitudinal (I-I), et ledit deuxième tronçon de passage (6) prolongeant le premier tronçon de passage (5) de telle sorte que les premier (5) et deuxième (6) tronçons de passage forment un angle (A) non nul entre eux,
- un deuxième élément (7) à deuxième passage traversant (8) s'étendant selon un deuxième axe longitudinal (II-II), comportant une extrémité distale (7b) destinée à recevoir en appui le premier élément (3), et comportant une extrémité proximale (7a) destinée à venir porter en appui axial contre ou destinée à venir pénétrer dans ledit implant dentaire (2),
- une vis de fixation (9) comportant une tête de vis (10) depuis laquelle s'étend une tige de vis (11) munie d'un tronçon fileté (12) destiné à être reçu par vissage dans ledit implant dentaire (2),
- plusieurs ailettes longitudinales (13a-13c) s'étendant selon le deuxième axe longitudinal (II-II) depuis et à l'écart de l'extrémité distale (7b) du deuxième élément (7), chaque ailette longitudinale (13a-13c) comportant une partie distale libre (130a-130c) radialement déplaçable à l'écart du deuxième axe longitudinal (II-II),
**caractérisé en ce que** :
- la tige de vis (11) est apte à traverser le deuxième élément (7) en étant reçue entre les ailettes longitudinales (13a-13c) et dans le deuxième passage traversant (8) pour se visser dans l'implant dentaire (2), tandis que la tête de vis (10) vient alors reposer en appui axial contre les parties distales libres (130a-130c) des ailettes longitudinales (13a-13c) pour retenir le deuxième élément (7) sur l'implant dentaire (2),
- le premier tronçon de passage (5) du premier élément (3) comporte des dimensions transversales permettant la réception des ailettes longitudinales (13a-13c) et de la tête de vis (10) par pénétration axiale selon le premier axe longitudinal (I-I) depuis l'extrémité proximale (3a) du premier élément (3),
- la tête de vis (10) et les parties distales libres (130a-130c) des ailettes longitudinales (13a-13c) sont conformées de façon que, lorsque le premier élément (3) reçoit les ailettes longitudinales (13a-13c) et la tête de vis (10), un déplacement relatif en translation de la vis de fixation (9) vers le deuxième élément (7) selon le deuxième axe longitudinal (II-II) provoque un déplacement radial des parties distales libres (130a-130c) des ailettes longitudinales (13a-13c) à l'écart du deuxième axe longitudinal (II-II) pour les presser contre la paroi latérale (5a) du premier tronçon de passage (5) afin de s'opposer à un retrait du premier élément (3) à l'écart du deuxième élément (7),
- le deuxième tronçon de passage (6) du premier élément (3) comporte des dimensions transversales inférieures à celles du premier tronçon de passage (5).

2. Composant dentaire (1) selon la revendication 1, **caractérisé en ce que** la tête de vis (10) comporte une surface de contact (10b) sensiblement tronconique destinée à venir en contact contre les parties distales libres (130a-130c) des ailettes longitudinales (13a-13c) et/ou les parties distales libres (130a-130c) des ailettes longitudinales (13a-13c) comportent des surfaces respectives de contact (131a-131c) destinées à recevoir en appui la tête de vis (10) et formant une surface sensiblement tronconique (14).

3. Composant dentaire (1) selon l'une des revendications 1 ou 2, **caractérisé en ce qu'**il comprend des moyens d'indexation en rotation (17) des premier (3) et deuxième (7) éléments autour du premier axe longitudinal (I-I).

4. Composant dentaire (1) selon l'une quelconque des revendications 1 à 3, **caractérisé en ce que** le deuxième élément (7) comporte un appendice proximal (18) à section transversale non circulaire destiné à être reçu dans un logement (19) à section transversale non circulaire de l'implant dentaire (2).

5. Composant dentaire (1) selon l'une quelconque des revendications 1 à 4, **caractérisé en ce que** le premier élément (3) est une âme monobloc en céramique de prothèse dentaire, de préférence usinée dans un bloc massif de céramique ou obtenue par frittage.

6. Composant dentaire (1) selon l'une quelconque des revendications 1 à 5, **caractérisé en ce que** la tête de vis (10) comporte une empreinte de vissage (10a) creuse à section transversale non circulaire.

7. Composant dentaire (1) selon l'une quelconque des revendications 1 à 6, **caractérisé en ce que** le premier élément (3) comporte une gorge (20) destinée à recevoir les parties distales libres (130a-130c) des ailettes longitudinales (13a-13c) lors de leur déplacement radial à l'écart du deuxième axe longitudinal (II-II).

8. Composant dentaire (1) selon la revendication 7, **caractérisé en ce que** les parties distales libres (130a-130c) des ailettes longitudinales (13a-13c) sont reçues dans la gorge (20) par un encliquetage réversible.

9. Composant dentaire (1) selon l'une des revendications 7 ou 8, **caractérisé en ce que** la gorge (20) et/ou les parties distales libres (130a-130c) des ailettes longitudinales (13a-13c) comportent des surfaces de contact (21, 22, 22a-22c) respectives conformées de façon que le pressage radial des parties distales libres (130a-130c) des ailettes longitudinales (13a-13c) contre la gorge (20) induise selon le premier axe longitudinal (I-I) un pressage de l'extrémité proximale (3a) du premier élément (3) contre l'extrémité distale (7b) du deuxième élément (7).

10. Composant dentaire (1) selon l'une quelconque des revendications 7 à 9, **caractérisé en ce que** :
- les parties distales libres (130a-130c) des ailettes longitudinales (13a-13c) sont déplaçables entre une position de retrait, dans laquelle elles sont radialement distantes du deuxième axe longitudinal (II-II) selon une première distance (d1), et une position d'écartement, dans laquelle elles sont radialement distantes du deuxième axe longitudinal (II-II) selon une deuxième distance (d2) supérieure à la première distance (d1),
- les parties distales libres (130a-130c) des ailettes longitudinales (13a-13c) sont élastiquement rappelées en position d'écartement,
- la gorge (20) et les ailettes longitudinales (13a-13c) sont dimensionnées et conformées de façon que les parties distales libres (130a-130c) des ailettes longitudinales (13a-13c) soient reçues par encliquetage dans la gorge (20) lorsque le premier tronçon de passage (5) reçoit les ailettes longitudinales (13a-13c) et la tête de vis (10) par pénétration axiale selon le premier axe longitudinal (I-I).

11. Ensemble dentaire (23) comportant :
- un composant dentaire (1) selon l'une quelconque des revendications 1 à 10,
- un implant dentaire (2) comportant un logement interne (24) à tronçon fileté (25) destiné à recevoir par vissage la vis de fixation (9).

12. Procédé d'assemblage ex-vivo d'un composant dentaire (1) selon la revendication 10, comprenant les étapes suivantes :
a) insérer la tige de vis (11) entre les ailettes longitudinales (13a-13c) et dans le deuxième passage traversant (8),
b) insérer dans le premier tronçon de passage (5) les ailettes longitudinales (13a-13c) et la tête de vis (10) par un mouvement de translation axiale selon le premier axe longitudinal (I-I) depuis l'extrémité proximale (3a) du premier élément (3), jusqu'à obtenir un encliquetage des parties distales libres (130a-130c) des ailettes longitudinales (13a-13c) dans la gorge (20).

## Patentansprüche

1. Dentalkomponente (1) zur individuellen prothetischen Rekonstruktion eines Zahnes, die zur Aufnahme auf einem Dentalimplantat (2) vorgesehen ist, umfassend:
- ein erstes Element (3) nach Art eines Kerns, auf dem Stratifizierung durchgeführt ist oder nach Art eines Keramikkerns, wobei das besagte erste Element (3) einen ersten Durchgangsdurchlass (4) aus aufeinanderfolgend einem ersten (5) und zweiten (6) Durchlassabschnitt besitzt, wobei sich der besagte erste Durchlassabschnitt (5) von einem proximalen Ende (3a) des ersten Elementes (3) entlang einer ersten Längsachse (I-I) erstreckt und der besagte zweite Durchlassabschnitt (6) den ersten Durchlassabschnitt (5) derart verlängert, dass der erste (5) und zweite (6) Durchlassabschnitt zwischen sich einen Winkel (A) ungleich Null bilden,
- ein zweites Element (7) mit einem sich entlang einer zweiten Längsachse (II-II) erstreckenden zweiten Durchgangsdurchlass (8), umfassend ein distales Ende (7b) zur Aufnahme des ersten Elementes (3) per Auflage und umfassend ein proximales Ende (7a) zum axialen Auflagern auf oder zum Eingriff in das besagte Dentalimplantat (2),
- eine Fixierschraube (9) umfassend einen Schraubenkopf (10) von dem sich ein Schraubenschaft (11) mit einem Gewindeabschnitt (12) zur Schraubaufnahme im besagten Dentalimplantat (2) erstreckt,
- mehrere Längsrippen (13a-13c), die sich entlang der zweiten Längsachse (II-II) vom distalen Ende (7b) des zweiten Elementes (7) wegerstrecken, wobei jede Längsrippe (13a-13c) einen freien distalen Teil (130a-130c) umfassen, der radlan von der zweiten Längsachse (II-II) wegbewegbar ist,
**dadurch gekennzeichnet, dass**
- der Schraubenschaft (11) durch das zweite Element (7) durch Aufnahme zwischen Längsrippen (13a-13c) und in den zweiten Durchgangsdurchlass (8) zum Schrauben in das Dentalimplantat (2) führbar ist, während der Schraubenkopf (10) dann axial gegen die freien distalen Teile (130a-130c) der Längsfinnen (13a-13c) zur Anlage kommt, um das zweite Element (7) auf dem Dentalimplantat (2) zu halten,
- der erste Durchlassabschnitt (5) des ersten Elementes (3) eine Querausdehnung aufweist, die es den Längsfinnen (13a-13c) und dem Schraubenkopf (10) ermöglicht, durch axiales Eindringen entlang der ersten Längsachse (I-I) vom proximalen Ende (3a) des ersten Elementes (3) aufnehmbar ist,
- der Schraubenkopf (10) und die freien distalen Teile (130a-130c) der Längsrippen (13a-13c) derart konfiguriert sind, dass wenn das erste Element (3) die Längsfinnen (13a-13c) und den Schraubenkopf (10) aufnimmt, eine relative translatorische Verschiebung der Fixierschraube (9) gegen das zweite Element (7) entlag der zweiten Längsachse (II-II) eine radiale Verschiebgung der freien distalen Teile (130a-130c) der Längsrippen (13a-13c) weg von der zweiten Längsachse (II-II) verursacht, um sie gegen die äußere Wand (5a) des ersten Durchlassabschnitts (5) zu drücken, um sich einem Entfernen des ersten Elementes (3) weg vom zweiten Element (7) zu widersetzen,
- der zweite Durchlassabschnitt (6) des ersten Elementes (3) eine Querausdehnung aufweist, die kleiner ist, als die des ersten Durchlassabschnittes (5).

2. Dentalkomponente (1) nach Anspruch 1, **dadurch gekennzeichnet, dass** der Schraubenkopf (10) eine im Wesentlichen kegelstumpfförmige Kontaktoberfläche (10b) umfasst, die vorgesehen ist, gegen die freien distalen Teile (130a-130c) der Längsrippen (13a-13c) zu kommen und/oder die freien distalen Teile (130a-130c) der Längsrippen (13a-13c) entsprechende Kontaktoberflächen (131a-131c) umfassen, die vorgesehen sind, den Schraubenkopf (10) per Anlage aufzunehmen und eine im Wesentlichen kegelstumpfförmige Oberfläche (14) bilden.

3. Dentalkomponente (1) nach einem der Ansprüche 1 oder 2, **dadurch gekennzeichnet, dass** sie Drehindizierungsmittel (17) zum Indizieren des ersten (3) und zweiten (7) Elementes um die erste Längsachse (I-I) umfasst.

4. Dentalkomponente (1) nach einem der Ansprüche 1 bis 3, **dadurch gekennzeichnet, dass** das zweite Element (7) einen proximalen Fortsatz (18) mit einem nichtkreisförmigen Querschnitt umfasst, der vorgesehen ist, in einem Gehäuse (19) des Dentalimplantats (2) mit nichtkreisförmigen Querschnitt aufgenommen zu werden.

5. Dentalkompenente (1) nach einem der vorstehenden Ansprüche 1 bis 4, **dadurch gekennzeichnet, dass** das erste Element (3) eine Dentalprothese mit keramischen Monoblockkern ist, der vorzugsweise aus einem keramischen Festblock gefertigt oder durch Sintern erhalten ist.

6. Dentalkomponente (1) nach einem der vorstehenden Ansprüche 1 bis 5, **dadurch gekennzeichnet, dass** der Schraubenkopf (10) eine hohle Schraubbuchse (10a) mit nichtkreisförmigem Querschnitt umfasst.

7. Dentalkomponente (1) nach einem der Ansprüche 1 bis 6, **dadurch gekennzeichnet, dass** das erste Elemente (3) eine Rille (20) umfasst, die vorgesehen ist, die freien distalen Teile (130a-130c) der Längsrippen (13a-13c) aufzunehmen, während ihrer radialen Verschiebung weg von der zweiten Längsachse (II-II).

8. Dentalkomponente (1) nach Anspruch 7, **dadurch gekennzeichnet, dass** die freien distalen Enden (130a-130c) der Längsrippen (13a-13c) in der Rille (20) durch reversiblen Eingriff aufgenommen sind.

9. Dentalkomponente (1) nach einem der Ansprüche 7 oder 8, **dadurch gekennzeichnet, dass** die Rille (20) und/oder die freien distalen Teile (130a-130c) der Längsrippen (13a-13c) entsprechende Kontaktflächen (21, 22, 22a-22c) umfassen, die derart konfiguriert sind, dass das radiale Drücken der freien distalen Teile (130a-130c) der Längsrippen (13a-13c) gegen die Rille (20) entlang der ersten Längsachse (I-I) ein Pressen des proximalen Endes (3a) des ersten Elementes (3) gegen das distale Ende (7b) des zweiten Elementes (7) verursacht.

10. Dentalkomponente (1) nach einem der Ansprüche 7 bis 9, **dadurch gekennzeichnet, dass**
- die freien distalen Teile (130a-130c) der Längsrippen (13a-13c) zwischen einer Verschlussposition, in der sie mit einer ersten Entfernung (d1) radial entfernt von der zweiten Längsachse (II-II) sind und einer Ausbreitungsposition, in der sie mit einer zweiten Entfernung (d2), größer als die erste Entfernung (d1), radial von der zweiten Längsachse (II-II) entfernt sind, verschieblich sind,
- die zweiten distalen Teile (130a-130c) der Längsrippen (13a-13c) elastisch in die Ausbreitungsposition rückgestellt sind,
- die Rille (20) und die Längsrippen (13a-13c) derart dimensioniert und konfiguriert sind, dass die freien distalen Teile (130a-130c) der Längsrippen (13a-13c) durch Schnappverschluss in der Rille (20) aufgenommen sind, wenn der erste Durchlassabschnitt (5) die Längsrippen (13a-13c) und den Schraubenkopf (10) durch axiales Eindringen entlang der ersten Längsachse (I-I) aufnimmt.

11. Dentalaufbau (23), umfassend:
- eine Dentalkomponente (1) nach einem der vorstehenden Ansprüche 1 bis 10,
- ein Dentalimplantat (2), umfassend ein internes Gehäuse (24) mit einem Gewindeabschnitt (25) zur Aufnahme der Fixierschraube (9) durch Schrauben.

12. Verfahren zum ex-vivo-Aufbau einer Dentalkomponente (1) nach Anspruch 10, umfassend die folgenden Schritte:
a) Einsetzen des Schraubenschaftes (11) zwischen die Längsrippen (13a-13c) und in den Durchgangsdurchlass (8),
b) Einsetzen der Längsrippen (13a-13c) und des Schraubenkopfes (10) in den ersten Durchlassabschnitt (5) durch eine axiale translatorische Bewegung entlang der ersten Längsachse (I-I) vom proximalen Ende (3a) des ersten Elementes (3) bis die freien distalen Teile (130a-130c) der Längsrippen (13a-13c) in die Rille (20) einschnappen.

## Claims

1. A dental component (1) for the individual prosthetic reconstruction of a tooth, intended to be received on a dental implant (2), comprising:
- a first element (3), of the core type on which stratification is performed, or of the ceramic core type, said first element (3) having a first through-passage (4) made up of first (5) and second (6) successive passage portions, said first passage portion (5) extending from a proximal end (3a) of the first element (3) along a first longitudinal axis (I-I), and said second passage portion (6) extending the first passage portion (5) in such a way that the first (5) and second (6) passage portions form between them a non-zero angle (A),
- a second element (7) with a second through-passage (8) extending along a second longitudinal axis (II-II), comprising a distal end (7b) intended to receive in abutment the first element (3), and comprising a proximal end (7a) intended to bear in axial abutment against or intended to penetrate into said dental implant (2),
- a fixing screw (9) comprising a screw head (10) from which there extends a screw shank (11) provided with a threaded portion (12) intended to be received by screwing in said dental implant (2),
- several longitudinal fins (13a-13c) extending along the second longitudinal axis (II-II) from and away from the distal end (7b) of the second element (7), each longitudinal fin (13a-13c) comprising a free distal part (130a-130c) that can be moved radially away from the second longitudinal axis (II-II),
**characterized in that**:
- the screw shank (11) is able to pass through the second element (7) by being received between the longitudinal fins (13a-13c) and into the second through-passage (8) in order to screw into the dental implant (2), whereas the screw head (10) then comes to rest in axial abutment against the free distal parts (130a-130c) of the longitudinal fins (13a-13c) to retain the second element (7) on the dental implant (2),
- the first passage portion (5) of the first element (3) has transverse dimensions allowing the longitudinal fins (13a-13c) and the screw head (10) to be received by axial penetration along the first longitudinal axis (I-I) from the proximal end (3a) of the first element (3),
- the screw head (10) and the free distal parts (130a-130c) of the longitudinal fins (13a-13c) are configured in such a way that, when the first element (3) receives the longitudinal fins (13a-13c) and the screw head (10), a relative translational displacement of the fixing screw (9) toward the second element (7) along the second longitudinal axis (II-II) causes a radial displacement of the free distal parts (130a-130c) of the longitudinal fins (13a-13c) away from the second longitudinal axis (II-II) in order to press them against the lateral wall (5a) of the first passage portion (5) in order to oppose a withdrawal of the first element (3) away from the second element (7),
- the second passage portion (6) of the first element (3) has transverse dimensions smaller than those of the first passage portion (5).

2. The dental component (1) as claimed in claim 1, **characterized in that** the screw head (10) comprises a substantially frustoconical contact surface (10b) intended to come into contact against the free distal parts (130a-130c) of the longitudinal fins (13a-13c) and/or the free distal parts (130a-130c) of the longitudinal fins (13a-13c) comprise respective contact surfaces (131a-131c) intended to receive in abutment the screw head (10) and forming a substantially frustoconical surface (14).

3. The dental component (1) as claimed in either of claims 1 and 2, **characterized in that** it comprises rotational-indexing means (17) for indexing the first (3) and second (7) elements about the first longitudinal axis (I-I).

4. The dental component (1) as claimed in any one of claims 1 to 3, **characterized in that** the second element (7) comprises a proximal appendage (18) of non-circular cross section which is intended to be received in a housing (19) of non-circular cross section of the dental implant (2).

5. The dental component (1) as claimed in any one of claims 1 to 4, **characterized in that** the first element (3) is a dental prosthesis ceramic monoblock core, preferably machined from a solid block of ceramic or obtained by sintering.

6. The dental component (1) as claimed in any one of claims 1 to 5, **characterized in that** the screw head (10) comprises a hollow screwing socket (10a) of non-circular cross section.

7. The dental component (1) as claimed in any one of claims 1 to 6, **characterized in that** the first element (3) comprises a groove (20) intended to receive the free distal parts (130a-130c) of the longitudinal fins (13a-13c) during their radial displacement away from the second longitudinal axis (II-II).

8. The dental component (1) as claimed in claim 7, **characterized in that** the free distal parts (130a-130c) of the longitudinal fins (13a-13c) are received in the groove (20) via reversible snap-fastening.

9. The dental component (1) as claimed in either of claims 7 and 8, **characterized in that** the groove (20) and/or the free distal parts (130a-130c) of the longitudinal fins (13a-13c) comprise respective contact surfaces (21, 22, 22a-22c) which are configured in such a way that the radial pressing of the free distal parts (130a-130c) of the longitudinal fins (13a-13c) against the groove (20) causes, along the first longitudinal axis (I-I), a pressing of the proximal end (3a) of the first element (3) against the distal end (7b) of the second element (7).

10. The dental component (1) as claimed in any one of claims 7 to 9, **characterized in that**:
- the free distal parts (130a-130c) of the longitudinal fins (13a-13c) are displaceable between a closed-up position in which they are radially distant from the second longitudinal axis (II-II) by a first distance (d1), and a spread position in which they are radially distant from the second longitudinal axis (II-II) by a second distance (d2) greater than the first distance (d1),
- the free distal parts (130a-130c) of the longitudinal fins (13a-13c) are elastically returned to the spread position,
- the groove (20) and the longitudinal fins (13a-13c) are dimensioned and configured in such a way that the free distal parts (130a-130c) of the longitudinal fins (13a-13c) are received by snap-fastening in the groove (20) when the first passage portion (5) receives the longitudinal fins (13a-13c) and the screw head (10) by axial penetration along the first longitudinal axis (I-I).

11. A dental assembly (23) comprising:
- a dental component (1) as claimed in any one of claims 1 to 10,
- a dental implant (2) comprising an internal housing (24) with a threaded portion (25) intended to receive the fixing screw (9) by screwing.

12. A method for the ex-vivo assembly of a dental component (1) as claimed in claim 10, comprising the following steps:
a) inserting the screw shank (11) between the longitudinal fins (13a-13c) and into the second through-passage (8),
b) inserting into the first passage portion (5) the longitudinal fins (13a-13c) and the screw head (10) through an axial translational movement along the first longitudinal axis (I-I) from the proximal end (3a) of the first element (3) until the free distal parts (130a-130c) of the longitudinal fins (13a-13c) snap-fasten into the groove (20).
